# EUROPEAN PATENT APPLICATION

(11) **EP 3 327 213 A1**
(43) Date of publication of application: **30.05.2018**
(21) Application number: 16382555.7
(22) Date of filing: 24.11.2016
(51) Int. Cl.: E04B 1/19

(54) **NODE ELEMENTS, KIT, AND METHOD FOR ASSEMBLING**

(71) Applicant: Lopez Blanco, Jose Ramon, 28922 Alcorcon (ES)
(72) Inventor: Lopez Blanco, Jose Ramon, 28922 Alcorcon (ES)
(74) Representative: ZBM Patents - Zea, Barlocci & Markvardsen

(57) **Abstract**

Examples of first node elements (1), second node elements (20), and kits are disclosed. Also, methods for assembling a lattice structure are disclosed. The first node element (1) comprises a coupling side (3), wherein the coupling side further comprises one or more hollow insertion channels (4a, 4b), wherein each channel is configured to receive one of the elongated bars, and wherein each channel has a longitudinal axis, and the longitudinal axis of each channel is tilted at an angle with respect to a plane defined by the coupling side. Moreover, the first node element comprises a contact side (2), wherein the contact side comprises an opening (6), wherein the opening is communicated with each of the hollow insertion channels forming a corresponding through-hole such that to form the lattice structure the elongated bars are inserted into the hollow channels from the contact side to the coupling side thereby traversing the corresponding through-hole.

## Description

The present disclosure relates to first node elements for attaching two or more elongated bars and second node elements for attaching one or more elongated bars forming a lattice structure. The present disclosure further relates to kits including such first node elements and second node elements. The disclosure further relates to methods for assembling a lattice structure.

### BACKGROUND

Lattice structures may be described as networks of intersecting elongated bars joined together using connecting means, e.g. nodes at their intersection points. It is well known that the highest buckling resistance of these structures is generally achieved using bars with clamped ends, wherein the translational and rotational movements of the bars are restrained, in contrast to pinned ends where only translational movements of the bars are fixed. Furthermore, resultant forces should converge into a single point, i.e. a non-eccentric point, to prevent additional moments and shear forces that may reduce the resistance of the joint.

The most popular means to obtain non-eccentric joints with clamped bar ends are welding or bolting, that generally require gusset plates and specific tools. Another popular means employ nodal connectors to secure the bars and to obtain stable structures.

A known connector for the above purpose comprises a screw bolt at each end of each bar that can be axially advanced or withdrawn along the bar. In a completely assembled state, the screw bolt at each end of the bar can be advanced (and thus inserted) by appropriate operation into a corresponding mounting surface of the node. Therefore, when screw bolts of the bar are adjusted axially in opposite directions by suitable relative movement, the bars are properly connected to the nodes.

A further known connector comprises integral cylindrical hubs with serrated keyways and bars with their ends pressed to form a coined edge, wherein the coin edge is inserted into the keyways of the hub. To secure the bars, washers are placed at each end of the hub and a screw bolt is passed through the center of the hub.

The document US4353662 discloses a joint system comprising thick spherical shell connectors, wherein the connectors are opened at their bottom to permit bolt insertion and screwing. The structural members are hollow bars having conical ends welded to both ends of the tube. End cones have threaded holes ready to receive the corresponding bolts. Moreover, other systems even do not need a node element to join the bars. For example, the document EP0214137 describes that the chord members are continuous at the intersections. Furthermore, overlapping members meeting at the intersections are flattened to be fastened with pads and bolts.

Despite of the extensive use of welding, bolting, and the aforementioned arrangements as general jointing systems, all of them may experience one or more of the following disadvantages. The strength of the bars may be compromised at their ends as a consequence of the special features required for mating, e.g. flattened or conical bar ends. This intrinsic weakness of the connections may be minimized by increasing the thicknesses of both bars and node elements, thus leading to increased material costs and reduced weight efficiency. Moreover, some mating features usually require welding, milling, threading, or some combination of them for their fabrication, which may greatly contribute to increase expenditures. Regarding the buckling behavior, in all these arrangements, bar ends are generally modeled as pinned instead of clamped (the more favorable case), mainly because the connection cannot withstand large bending moments. This may be compensated by using thicker components that increases weight and material costs even more. The more traditional welding or bolting assembly methods are costly, especially in terms of time and labor, and usually require gusset plates and specific scaffolding or complex alignment tools that further increase expenditures. Furthermore, the disassembly or decommissioning cost of aforementioned assembly methods is generally high, in particular for welded and / or bolted structures.

Examples of the present disclosure seek to at least partially reduce one or more of the aforementioned problem.

### SUMMARY

In a first aspect, a first node element for attaching two or more elongated bars forming a lattice structure is provided. The first node element may comprise a coupling side, wherein the coupling side may further comprise one or more hollow insertion channels, wherein each channel is configured to receive one of the elongated bars, and wherein each channel has a longitudinal axis, and the coupling side defines a plane, and the longitudinal axis of each channel is tilted at an angle with respect to the plane defined by the coupling side. Moreover, the first node element may comprise a contact side, wherein the contact side may comprise an opening. Additionally, the opening is communicated with each of the hollow insertion channels forming a corresponding through-hole such that to form the lattice structure the elongated bars are inserted into the hollow channels from the contact side to the coupling side thereby traversing the corresponding through-hole.

According to this first aspect, a first node element that is configured to provide the function of forming a lattice structure is provided. To this end, the first node element is provided with an opening, wherein the opening is communicated with each of the hollow insertion channels forming a corresponding through-hole such that to form the lattice structure the elongated bars are inserted into the hollow channels from the contact side to the coupling side thereby traversing the corresponding through-hole.

With such an arrangement, the bars can be inserted through the corresponding through-hole and installed in a simple and fast manner. Once the elongated bars are inserted through the corresponding through-hole (and thus installed), the elongated bars are self-interlocked by simple means instead of more traditional connections that require additional use of axially displaceable screw bolts, gusset plates, or welding.

In a second aspect, a second node element for attaching one or more elongated bars forming a lattice structure is provided. The second node element may comprise a coupling side and a contact side. The coupling side may comprise one or more mounting elements, wherein each mounting element is configured to couple an end of a bar.

In a further aspect, a kit is provided including at least a first node element according to any of the examples described herein and at least a second node element according to any of the examples described herein.

In yet a further aspect, a method for assembling a lattice structure is provided. At least one first node element according to any of the examples described herein is provided. Furthermore, at least one second node element according to any of the examples described herein is provided. Additionally, one or more bars are provided. The method comprises inserting the bars through the hollow insertion channels of the first node element from the contact side to the coupling side by traversing the corresponding through-hole until an end of the bars is attached to a mounting element of the second node element.

According to this aspect, the bars are inserted and self-interlocked with respect to the first and the second node elements in a time-efficient way by simple means. This is performed without complex tools or heavy cranes. Besides, the inter-locked lattice structure provides an improved security against thief or sabotage.

In some examples, the method further comprises securing a second node element to the first node element after inserting the bars through the hollow insertion channels of the first node element.

This way, upon installation of the bars and securing the first node element to the second node element, the translational and the rotational movements of the bars are restrained (instead of traditional pinned solutions, wherein only the translational movements are restrained), thus buckling resistance of the bars under compressive loads is optimized. Additionally, a strong and stiff attachment between the bars and the node elements by simple means is achieved.

In summary, securing the first node element to the second node element after inserting the bars through the hollow insertion channels of the first node element from the contact side to the coupling side by traversing the corresponding through-hole until an end of the bars is attached to a mounting element of the second node element provides a strong, versatile, fast, and simple assembly method. The use of complex and time-consuming connections, e.g. extendable pin connections, bolting, welding, or gusset plates for assembly is avoided. Additionally, all parts can be fabricated repetitively by standard and inexpensive techniques, e.g. metal casting or plastic injection molding. Furthermore, the same assembling method is employed regardless of the elongated bars shape, thus providing a particularly versatile assembly. Moreover, eccentric or non-eccentric unions can be designed as required.

### BRIEF DESCRIPTION OF THE DRAWINGS

Non-limiting examples of the present disclosure will be described in the following, with reference to the appended drawings, in which:
Figure 1 a, figure 1b, and figure 1c schematically illustrate an example of a first node element;
Figure 2a schematically illustrates an exploded view of the first node element of figures 1a - 1c comprising a retention element, two retention screws, and a second node element;
Figure 2b schematically illustrates an example of the second node element of figure 2a;
Figures 3a and 3b illustrates a cross-section of the first node element comprising one of the screws of figure 2a;
Figure 4 schematically illustrates another example of a first node element and a second node element;
Figure 5 schematically illustrates yet another example of a first node element and an auxiliary bar;
Figures 6a - 6r schematically illustrate a sequence of situations that may occur during the performance of a method for assembling a lattice structure;
Figure 7 shows an example of a lattice structure;
Figure 8 shows another example of a lattice structure.

### DETAILED DESCRIPTION OF EXAMPLES

Along the present description and claims the term "elongated bars" is to be understood as tubes, profiles, struts, chords, braces, girders, or any other similar structural member that may be used in lattice structures to the same purpose.

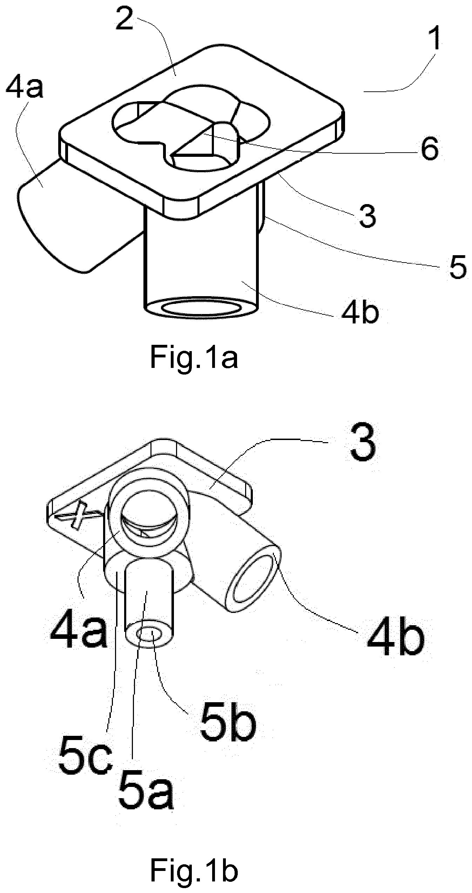

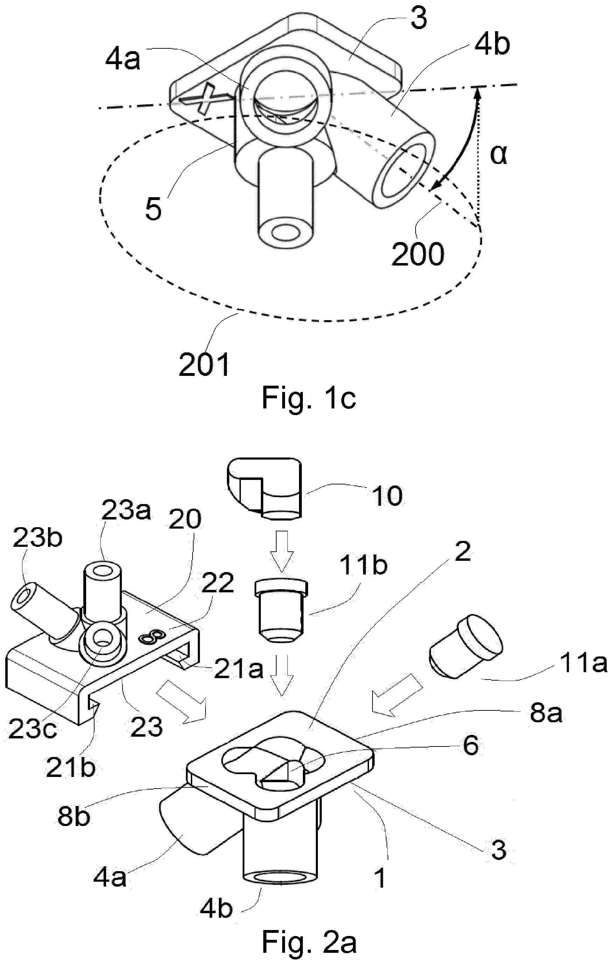

Figures 1 a, 1b, and 1c schematically illustrate an example of a first node element. The first node element 1 shown in these figures may be part of a lattice structure. The first node element 1 may be made of metal, fiber reinforced plastic, concrete, or other suitable material.

The first node element 1 may comprise a contact side 2 and a coupling side 3. In this example, the coupling side 3 may comprise two hollow insertion channels 4a, 4b.

Each channel may have the same diameter along the length of the channel. In some other examples, each channel may have a greater diameter at a first end at or near the contact side than the diameter at or near a second end opposite to the first end near the coupling side such that the diameter of the channel decreases along the longitudinal length of the channel. This way, each channel may be tapered, thus the insertion of a bar into the channel may be facilitated. In some other examples, some of the channels of the coupling side 3 may have the same diameter along the length of the channel and some other channels may have the shape of a funnel. Furthermore, the channels may have same or different diameters in order to allocate elongated members of different diameters.

The channels may be integrally formed with the first node element 1. In alternative examples, the channels may be coupled by suitable means to the coupling side 3 of the first node element 1.

The channels 4a, 4b may be tilted at an angle with respect to the coupling side 3 as shown in figure 1c. Particularly, the angle may be defined between the coupling side 3 and a longitudinal axis of the channels 4a, 4b. The angle may be any suitable angle that provides the insertion of a bar in the required position. In the example of figure 1 c, the angle α of the longitudinal axis 200 of the channel 4b with respect to a plane defined by the coupling side 3 is shown. The longitudinal axis 200 (and thus the channel 4b) may further adopt any of the orientations represented by the circle 201. In this particular example, the longitudinal axis of channel 4a may be at e.g. 50 degrees with respect to the coupling side 3. Moreover, the longitudinal axis 200 of channel 4b may be at e.g. 50 degrees with respect to the coupling side. However, in some other examples, the angle of the longitudinal axis of the channels 4a and 4b may be between 20 and 90 degrees with respect to the coupling side 3.

In this particular example, the angle between the longitudinal axis of the channel 4a and the plane defined by the coupling side 3 and the angle between the longitudinal axis of the channel 4b and the plane defined by the coupling side 3 may be the same at each channel 4a, 4b. In some other examples, the angle of the channel 4a and the channel 4b may be different.

Additionally, the channels 4a, 4b may be arranged such that the projections of their longitudinal axes on the plane of the coupling side 3 form an angle of between 180 and 20 degrees.

The coupling side 3 may further comprise a mounting element 5 configured to receive an end of a hollow elongated bar. Particularly, as shown in figure 1b, the mounting element 5 may comprise an elongated protrusion 5a having a hollow interior 5b and a stopper 5c. In some examples, the protrusion 5a may be a solid protrusion. In other examples, the mounting element 5 may be a blind hole prepared to receive an end of an elongated bar.

Along the present description and claims "mounting elements" or "mounting surfaces" is to be understood as a mounting element where the hollow bars can be inserted.

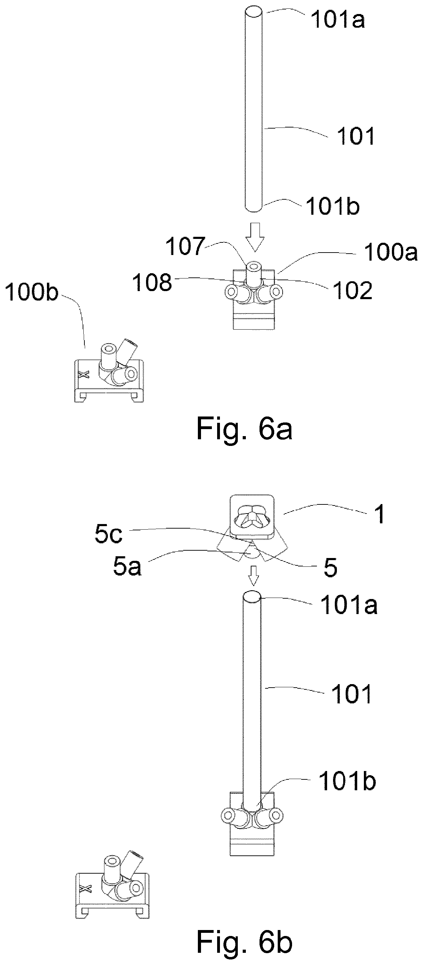

The stopper 5c may be specifically shaped to provide a seat for a bar of certain kind (as will be described in more detail in figures 6a - 6r) The hollow bar in question can thus be inserted in the protrusion 5a and be advanced until it encounters the seat 5c (or "stopper").

Similarly as before, the mounting element 5 may be tilted at an angle with respect to the coupling side 3, as shown in figure 1c for the channel 4b. The angle is defined between the plane defined by the coupling side 3 and a longitudinal axis of the mounting element 5. In this example, the angle of the mounting element with respect to the coupling side 3 may be 90 degrees, although some other suitable angles are possible, e.g. between 20 and 90 degrees with respect to the coupling side 3.

Again in figure 1 a, the contact side 2 may further comprise an opening 6 configured to receive a retention element (not shown). A through-hole is thus formed between the opening 6 and the channels 4a, 4b.

Particularly, the channels 4a, 4b may be specifically shaped to provide the insertion of an elongated bar (not shown) of a certain kind or shape. The elongated bar in question can thus be inserted from the contact side 2 to the coupling side 3 by traversing the corresponding through-hole formed between the opening 6 and each channel 4a, 4b. Then, the elongated bar may be advanced until an end of the bar is inserted into the mounting surfaces of a second node element (not shown) previously situated, e.g. in a first level on the ground.

With such an arrangement, the elongated bar can be easily attached to the first node element and the second node element (not shown), wherein the second node may be previously situated in a level different from the plane of the first node element, e.g. a first plane on the ground. This can be performed without the need of e.g. bolting, welding, gusset plates, or complex telescopic systems in the bar in order to attach the bar to the first and the second nodes. Moreover, the bar is self-interlocked between the nodes. This leads to an installation of the bar in a simple manner. Additionally, the translational and rotational movements of the bar are restrained once the bar is coupled to the second node element.

Figure 2a schematically illustrates an exploded view of the first node element of figures 1 a, 1 b, and 1 c comprising two retention screws 11 a, 11 b, a retention element 10, and a second node element 20. In this figure, the same reference numbers denote the same elements as those in the figures 1 a and 1 b. Also here the first node element may be provided with two hollow insertion channels 4a, 4b, wherein each channel is configured to receive one of the elongated bars, and an opening 6 configured to receive the retention element 10. The structure and operation of these elements may be the same as the one described for the first node element explained in figures 1 a, 1 b, and 1 c.

In this particular example, retention means e.g. a first retention screw 11a and a second retention screw 11 b may be provided. The retention screws 11 a, 11 b may be made of e.g. metal or plastic material.

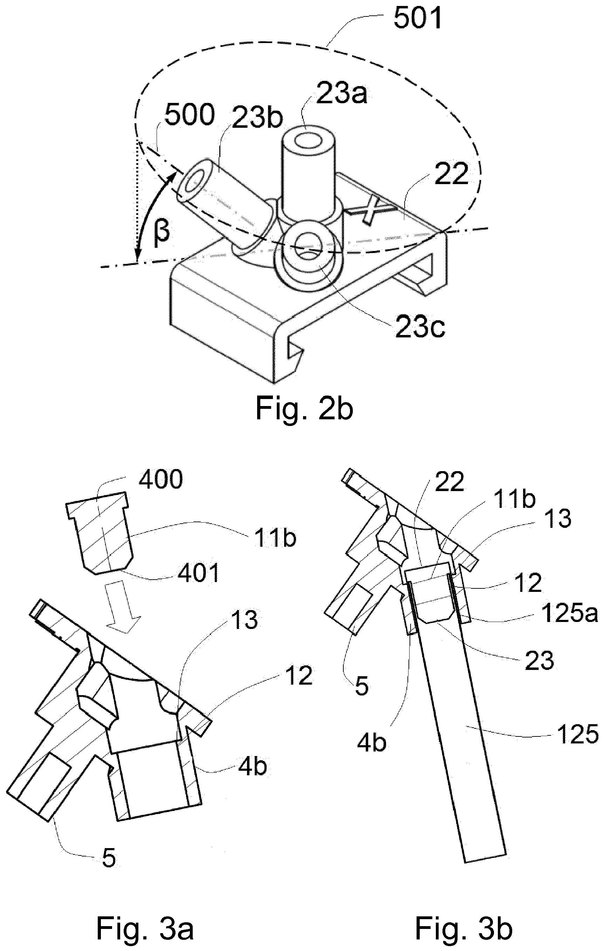

The structure and operation of the screw 11 b is shown in more detail in figures 3a and 3b. In this example, a bar 125 has already been inserted into the channel 4b from the contact side to the coupling side traversing the corresponding through-hole (see Figure 3b). The screw 11 b comprises threads along its outer circumferential surface between the head portion 400 and the bottom portion 401. A first end 125a of the bar 125 may be provided with an internal screw thread 12.

Moreover, the channel 4b may be provided with a stopper 13. The stopper 13 may be specifically shaped to provide a seat for the screw 11 b. The screw 11 b in question can thus be inserted in the channel 4b through the corresponding through-hole formed between the channel 4a and the opening. The screw 11 b may further be screwed into the first end 125a of the elongated bar until it encounters the seat 13 (or stopper).

With the use of screws, the bars can remain in place when tensile loads are applied to the node. Furthermore, the tensile strength of the connection between the bar and the channel 4b (and thus the first node element 1) may be improved. In some examples, instead of employing screws, one end of the bars may be countersunk or attached using a clip system to increase the tensile strength.

In some other examples, the screws may be provided with outer threads at or near the head portion 400, thus the screw may further be bolted to a threaded inner part of the first node element (and thus a better resistance against compressive forces may be achieved).

Similarly, a second bar (not shown) can be secured inside the channel 4a (and thus inside the first node element 1) using a screw 11 a. The structure and operation of the screw 11 a may be the same as the one described for the screw 11 b in figures 3a and 3b.

Furthermore, the screws 11 a and 11 b in use, i.e. when the first node element is attached to a second node element, may be hidden so they cannot be unscrewed while the first node 1 is attached to the bars (and also due to the fact that the lattice structure is self-interlocked and the opening covered by the second node element), thus providing additional protection against thief or sabotage. Moreover, the resulting connector is in a visually attractive appearance.

A second node element 20 may also be provided (see Figure 2a). Similarly, as the first node element, the second node element 20 may be made of metal, fiber reinforced plastic, or other suitable materials. The second node element may comprise a first grove 21 a and a second groove 21 b. The grooves may be integrally formed with the second node element 20 or attached by some means. In this particular example, the groves 21 a, 21 b are a rail structure (also referred herein as a track or slot) shaped and sized for guiding, directing, retaining, attaching, edges 8a, 8b located at laterally opposite sides of the contact side 2 of the first node element 1. In this example, the grooves may be L-shaped, however some other forms are possible to better fit the edges 8a, 8b, e.g. rounded. The edges 8a, 8b may be slidably engaged with the grooves 21 a, 21 b, respectively. Therefore, the second node element 20 may be coupled to the first node element 1. Additionally, bolting, welding, or any other means may be used to increase the tensile resistance of the coupling between first and second node elements.

The second node element may further comprise three mounting elements 23a, 23b, 23c. The structure of the mounting elements 23a, 23b, 23c may be the same as the one described for the mounting element 5 of the first node element described in figures 1 a and 1 b.

Similarly as before, the mounting elements 23a - 23c may be tilted at an angle with respect to the coupling side 22, as shown in figure 2b. The angle may be defined between the plane defined by the coupling side and a longitudinal axis of the mounting elements 23a - 23c. In this example, the longitudinal axis of the first mounting element 23a may be tilted at angle of 90 degrees with respect to the coupling side 22. The longitudinal axis 500 of the second mounting element 23b may be at an angle β of e.g. 50 degrees with respect to the coupling side 22. The mounting element 23b may further adopt any of the orientations represented by the circle 501.The longitudinal axis of the third mounting surface 23c may be at e.g. 50 degrees with respect to the coupling side 22. However, any suitable angle e.g. is possible depending on the desired orientation of each bar attached to each of the mounting elements 23a, 23b, 23c. Particularly, the angle of the longitudinal axis of the mounting elements 23a and 23b with respect to the plane defined by the coupling side 22 may be between 20 and 90 degrees.

In this particular example, the angle between the mounting element 23a and the coupling side 22 and the angle between the mounting element 23b and the coupling side 22 may be the same. In some other examples, the angle of the mounting element 23a and the mounting element 23b with respect to the coupling side 22 may be different angles.

Additionally, the mounting elements 23a, 23b may be arranged such that the projections of their longitudinal axes on the plane of the coupling side 22 form an angle of between 20 and 180 degrees.

In some examples, the angle α shown in figure 1c and the angle β shown in figure 2b may be the same angle. In some other examples, the angle α and the angle β may be different angles.

Also in figure 2a, as commented above, the first node element 1 may be provided with an opening 6 configured to receive a retention element. A retention element 10 may be provided. The retention element 10 may be made of metal, concrete, or plastic material. The material of the retention element 10 may be the same as the material of the first node element 1. Alternatively, the material of the first node element 1 and the material of the retention element 10 may be made of different materials.

In some examples, the retention element 10 may be rounded and it may comprise threads along its outer surface. In this particular example, the opening 6 may be provided with an internal screw thread. This way, the retention element 10 may be screwed to the opening 6. Therefore, the bars can remain in position in a proper manner. Furthermore, the compressive strength of the connection between the bar and the first node element may be improved. Moreover, the bars may remain in place without the presence of the second node element when compressive loads are applied to the node.

Again, once the elongated bars (not shown) are inserted into the hollow insertion channels 4a, 4b, the bars can be secured and fixed in position inside the respective channel 4a, 4b (and thus inside the first node element 1) using the retention element 10 and the second node element 20. Furthermore, the retention element 10 provides a suitable transmission of the compressive forces from the bars to the second node element.

In some examples, the elongated bars previously inserted into the openings 4a, 4b may be secured merely with the second node element 2, i.e. without requiring the retention element 10 or the screws 11 a, 11 b. Thus, the number of required parts per joint is reduced and the assembly is simpler.

In some other examples, the bars may be further secured with the screws 11 a, 11 b to increase the resistance to tensile forces. In this particular example, once the screws 11 a, 11 b are inserted as explained in figures 3a and 3b, the elongated bars may be further secured with the retention element 10 and the second node element 20 to also withstand compressive forces.

In yet further examples, the bars may be secured merely with the retention screws 11 a, 11 b and the second node element 20, thus the bars may properly remain in position without the retention element 10. This preserves compressive and tensile forces resistance while reducing the number of required parts and improving assembly simplicity.

Particularly in this figure 2a, the second node element 20, the retention screws 11 a, 11 b, and the retention element 10 could be pre-assembled with the first node element 1, thus forming a pre-assembled kit. Alternatively, the first node element, the second node element 20, the retention screws 11 a, 11 b and the retention element 10 can be delivered separately as a set of parts, in which case the personnel mounting the node, once the bars are inserted from the contact side to the coupling side traversing the corresponding through-hole formed between the opening 6 an the channels 4a, 4b, introduces the retention screws 11 a, 11 b through the channels and, subsequently, inserts the retention element 10 in the opening 6. Then, the second node element 20 may be connected to the first node element 1 in preparation for use.

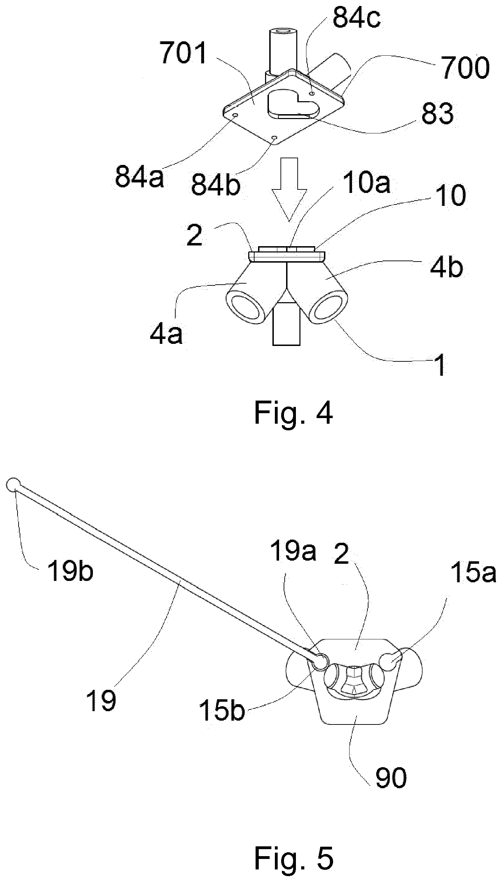

Figure 4 schematically illustrates another example of a second node element and a retention element. A first node element 1 may be provided (which may be a similar first node element as described before). Moreover, a high retention element 10 may be provided. In this example, a portion 10a of the high retention element 10 may protrude over the opening of the first node element 1. A second node element 700 may also be provided. Differently as before, the second node element 700 may be provided with an opening 83 in the contact side 701, wherein the opening 83 is configured to mate with the protruding portion 10a. This way, the relative motion between first and second node elements along the plane of the coupling side may be restrained by simple means. The structure and operation of the high retention element 10 may be the same as previously described.

Similarly as before, the bars may be introduced through the corresponding through-hole formed between the opening of the first node element and the channels 4a, 4b. Once the bars are introduced and attached to corresponding mounting surfaces in a second node element (not shown), a retention element 10 may be introduced into the opening 6 of the first node element. Once the retention element 10 is inserted, the portion 10a of the retention element 10 may protrude over the first node element 1. The second node element 700 may be brought in proximity of the first node element in the direction of the arrow. The contact side 701 of the second node element 700 may be situated over the contact side 2 of the first node element such that the protruding portion 10a of the retention element mates with the opening 83 of the second node element.

Additionally, the second node element 700 and the first node element 1 may be further secured to each other using, for example, bolts or studs (not shown). The bolts may be introduced into the corresponding holes 84a, 84b, 84c. The bolts can be tightened with suitable means, e.g. nuts (not shown), thus fixing the second node element 700 to the first node element 1. In some other examples, the second node element 700 and the first node element 1 may further be secured together by welding or any other means.

With such an arrangement, the protruding portion inserted into the opening 83 may lead to a better performance of the node against lateral and compressive loads. At the same time, the bolting or welding connection between the second node element 700 and the first node element 1 may lead to an improved withstand of tensile loads.

Figure 5 schematically illustrates yet another example of a first node element. A first node element 90 may be provided. It differs from the first node element of the previous figures in that the first node element 90 of this example comprises a first recess 15a and a second recess 15b. The recesses 15a, 15b may be located on the contact side 2 of the first node element 90. The recesses 15a, 15b may located at or near lateral opposite sides of the contact side surface, however any suitable position over the contact surface 2 is possible.

The recesses may be configured to receive a first end of an auxiliary elongated bar. In this example, a solid and elongated auxiliary bar 19 may be provided. The bar 19 may extend from a first end 19a to a second end 19b. The first end 19a of the bar 19 may be inserted and fitted into the recess 15b. The remainder of the structure of the first node element 90 may be substantially the same as described before.

The second end 19b of the bar 19 may be attached to another recess (not shown) located over the contact surface of another first node element (not shown) in the lattice structure.

Figures 6a - 6r schematically illustrate a sequence of situations that may occur during the performance of a method for assembling a lattice structure according to an example. Same reference numbers denote the same elements as those in the previous figures. The method is described below with reference to the sequences of situations illustrated by figures 6a -6r.

The figure 6a illustrates an example of an initial situation. In this figure, a second node element 100a and a second node element 100b are provided. Each second node element 100a, 100b may be similar to the second node elements shown in previous examples. The node elements may be situated at a permanent and fixed position in a first plane or level, e.g. on the floor.

In this figure, a first hollow bar 101 may be provided. The first bar 101 may extend from a first end 101 a to a second end 101 b.

The material choices for the first bar 101 may be any suitable material depending on application and manufacturing factors. Typical materials for use in the first bar include steel, aluminum, and carbon or glass fiber reinforced plastics among others. Where higher performance requirements are present, carbon fiber reinforced plastics are employed for the bars. Graphite materials and titanium are materials best suited for space applications where dimensional stability is often a requirement. Additionally, the bar 101 may have different diameters depending on the expected uses of the lattice structure to be formed.

The second end 101 b of the bar may be brought near to a first mounting element 102 of the second node element 100a. This way, the bar 101 is ready to be inserted in an elongated protrusion 107 until the end 101 b reaches the stopper 108.

The elongated protrusion 107 may have a suitable diameter in order to be inserted into a lumen of the hollow bar in the direction of the arrow. The elongated protrusion 107 may further have a very low coefficient of friction, thus the insertion and the removal of the bar may be improved. The elongated protrusion 107 may have a tapered end to facilitate the insertion. The end 101b of the bar 101 may further be screwed to a threaded elongated protrusion 107 to improve tensile strength.

Once the bar 101 is situated at the desired position, the hollow bar may be introduced into an elongated protrusion 107 of the mounting element 102 in the direction of the arrow until the end reaches the stopper 108, thus indicating that the bar has been properly placed on the second node element 100a.

In figure 6b, a first node element 1 may be provided. The first node element 1 may be similar to the first node element described in previous examples. The first node element 1 may comprise a mounting element 5. The mounting element may comprise an elongated protrusion 5a and a stopper 5c.

Similarly as before, the protrusion 5a may be introduced into the end 101a of the elongated bar 101 until the end 101 a reaches the stopper 5c. This way, the first node element 1 may properly be attached to the bar 101.

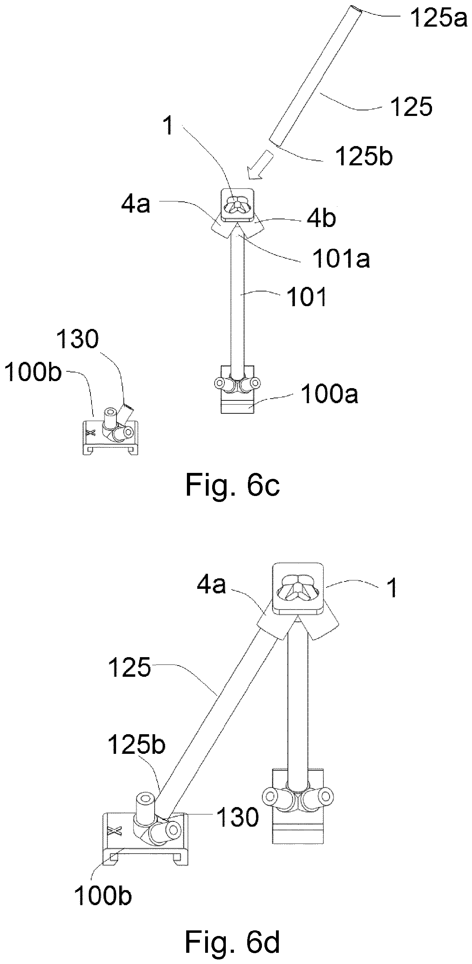

In figure 6c, a second bar 125 may be provided. The bar may extend from a first end 125a to a second end 125b.

As previously commented, the first node element 1 may be provided with an opening. The opening may be communicated with the first channel 4a. A through-hole is thus formed between the opening and the first channel 4a.

The bar 125 may thus be introduced through the through-hole (and thus through the opening and the first channel 4a) in the direction of the arrow until the lumen of a second end 125b of the hollow bar is introduced in a mounting surface 130 of a second node element 100b. Similarly as before, in some examples, the end 125b may be screwed to the mounting surface 130 in order to improve tensile strength.

In figure 6d, the bar 125 has already been inserted through the through-hole of the first node 1 (and thus through the first channel 4a) and a second end 125b of the bar 125 has already been introduced in the mounting surface 130 until a stopper is reached. Thus, the bar 125 has been properly installed.

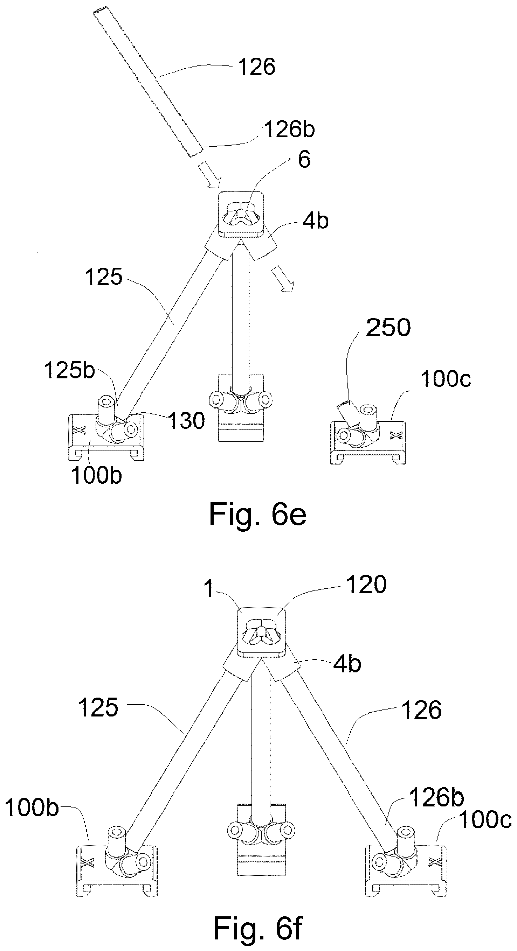

In figure 6e, a bar 126 may be provided. The structure of the bar 126 may be similar to the bar 125.

As previously commented, the opening 6 and the channel 4b may be communicated forming a corresponding through-hole. The bar 126 may thus be introduced through the through-hole formed in the direction of the arrow until the lumen of the second end 126b of the hollow bar is introduced in a mounting element 250 of a second node element 100c.

In some examples, the bars 125, 126 may have tapered ends for better insertion through the channels.

In figure 6f, the bar 126 has already been inserted through the through-hole of the first node 1 (and thus through the second channel 4b) and an end 126b of the bar 126 has already been introduced in a mounting element until a stopper is reached. Thus, the bar 126 has been properly installed.

In some examples, the bars 125, 126 may be installed by some means to a mounting element located, e.g. on the floor or a first node element instead of the second node elements.

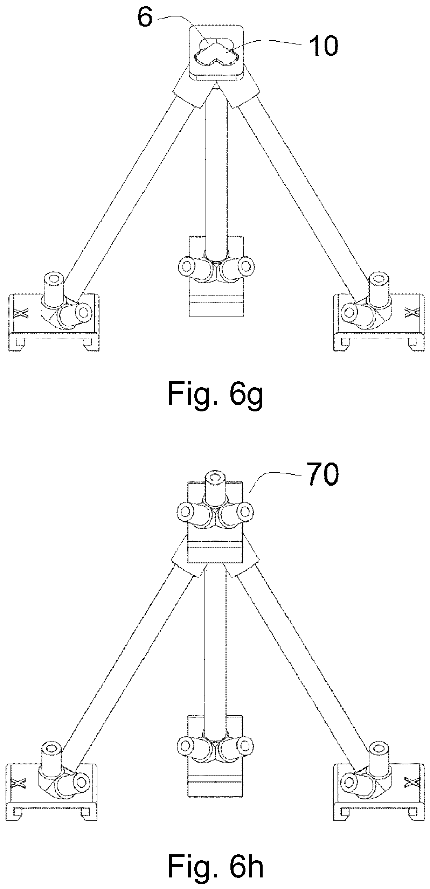

In figure 6g, the bars have already been installed. A retention element 10 as described in previous figures may be provided. At this moment, the retention element 10 may be placed into the opening 6.

In some examples not shown, previously to the insertion of the retention element 10 into the opening 6, a first and second retention screws as described in previous examples may be provided. The retention screws may be introduced into the corresponding channels as shown in figures 3a and 3b.

In yet further examples not shown, the first node element may be provided with recesses as shown in figure 5. Thus, auxiliary elongated bars as hereinbefore described may also be installed before a second node element is installed.

In figure 6h, a second node element 70 may be provided. The second node element 70 may be similar to the second node element disclosed in figure 2a. The second node element may be attached e.g. slidably attached to the first node element. Thus, the second node element is installed at a second level (different from the first level).

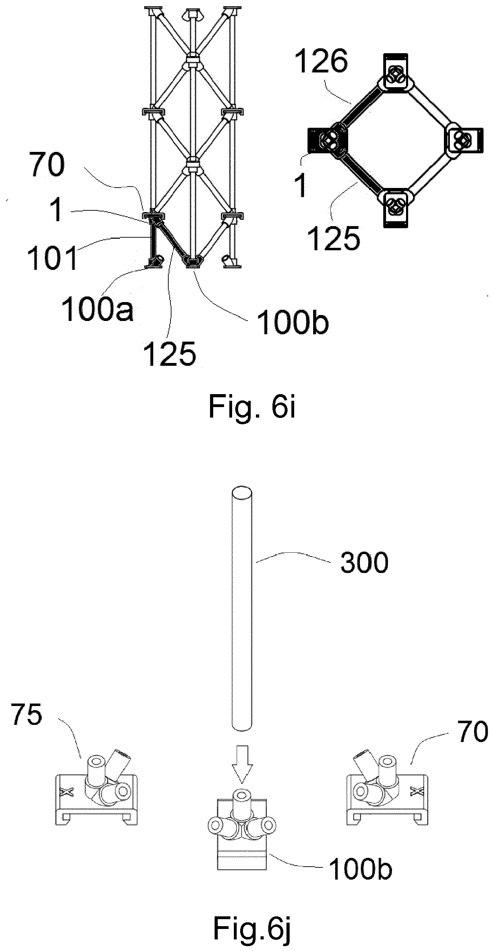

In figure 6i, schematic side and top views of the lattice structure are shown. The shadowed elements denote the elements which have already been assembled in the sequence of situations occurred in figures 6a - 6h.

In figure 6j, a bar 300 may be provided. The bar 300 is installed in the second node element 100b in the direction of the arrow. As previously commented, the second node element 70 has already been installed at a second level. Moreover, a further second node element 75 is provided at the second level that may have been installed as described in figures 6a - 6h.

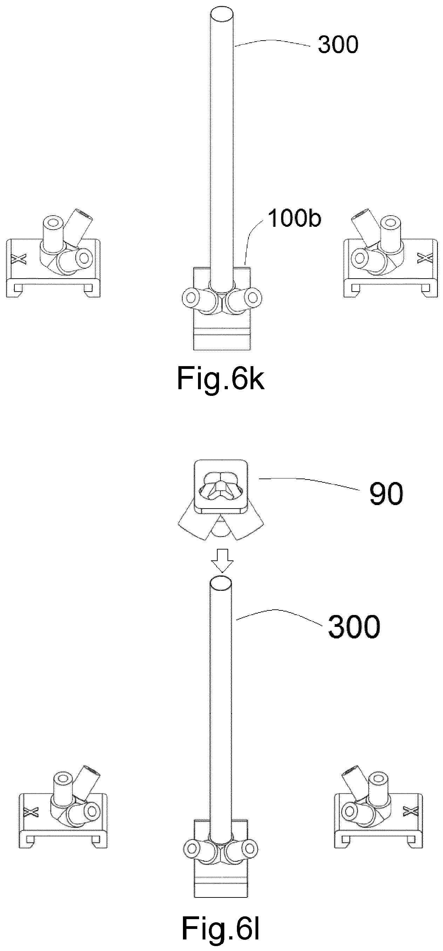

In figure 6k, the bar 300 has already been installed in the second node element 100b at the first level.

In figure 6l, a first node element 90 is installed at a third level at one end of the bar 300 in the direction of the arrow.

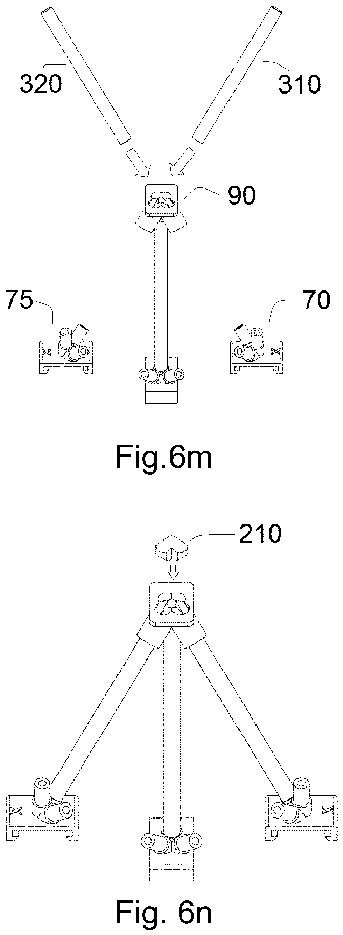

In figure 6m, the first node element 90 has already been installed to an end of the bar. Moreover, bars 310 and 320 are provided. The bars 310, 320 may be introduced through the corresponding through-hole of the first node element 90 in the direction of the corresponding arrow. Once the bars are introduced, one end of the bar 310 may be attached to the second node element 75. Similarly, one end of the bar 320 may be attached to the second node element 70.

In figure 6n, a retention element 210 is ready to be placed into the opening 6 of the first node element of the third level in the direction of the arrow.

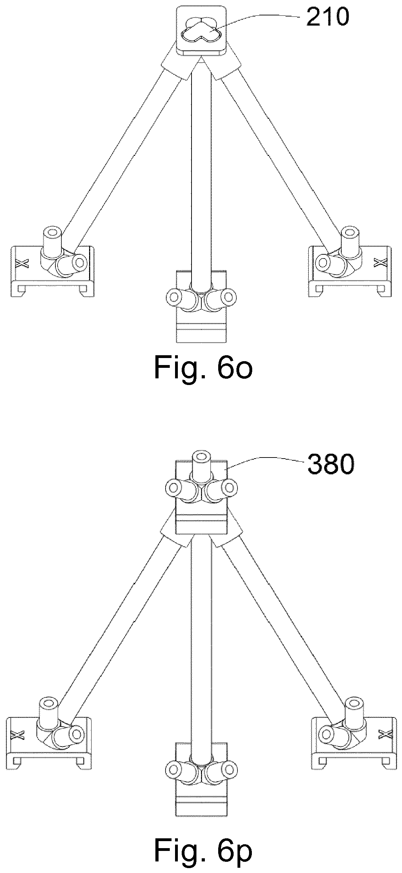

In figure 6o, the retention element 210 has already been placed into the opening.

In figure 6p, a second node element 380 may be provided. The second node element 380 may be similar to the second node element disclosed in figures 2a, 2b. The second node element 380 may be attached (e.g. slidably attached) to the first node element 90 in the third level.

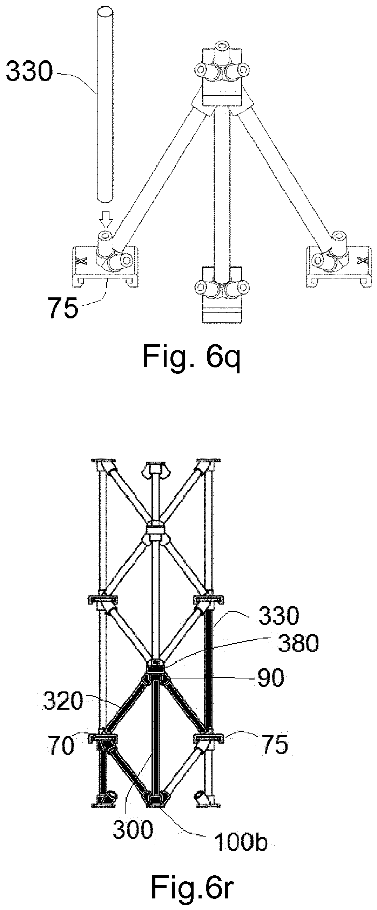

In figure 6q, a further bar 330 is provided. A first end of the bar may be brought near to a first mounting element of the second node element 75 of the second level. This way, the bar 330 is ready to be inserted in the direction of the arrow in an elongated protrusion until the end reaches a stopper.

Thus, the first end of the bar 330 may be installed (not shown) in the first mounting element of the second node element 75 of the second level. At this point of the assembly process, the second end of the bar 330 is ready for the installation of the next first node element at a fourth level (not shown).

In figure 6r, it is shown a schematic side view of the lattice structure. The shadowed elements denote the elements which have already been assembled in the sequence of situations occurred in figures 6a - 6q.

Evidently, the remaining first and second node elements and bars forming the lattice structure may be attached in the same way.

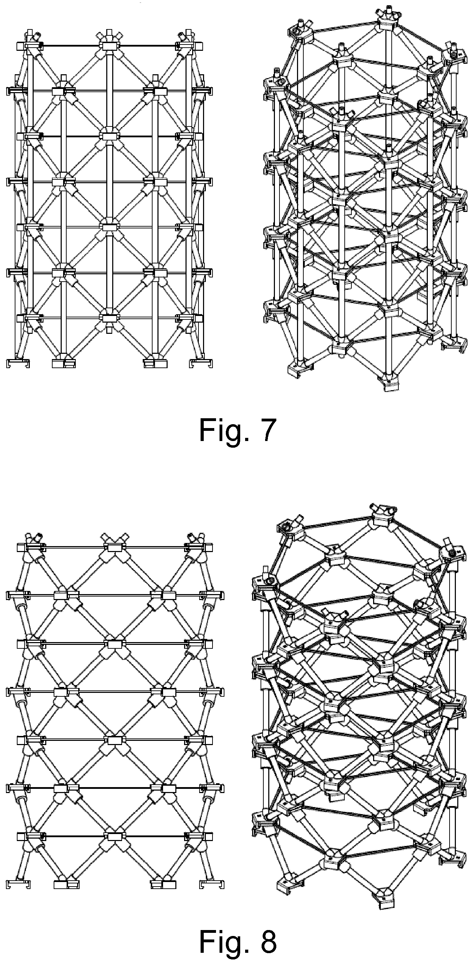

Figure 7 shows another example of a lattice structure using the first and second node elements as hereinbefore described. Particularly, the first node element and auxiliary bars illustrated in figure 5 are used here. Auxiliary bars are used to connect neighboring nodes in the same level.

Figure 8 shows yet another example of a lattice structure using examples of first and second node elements. In this example, each first node element comprises a single channel and a single mounting element. It differs from the example of figure 7 in that the mounting element is a blind hole instead of an elongated protrusion. However, similarly as the example of figure 7, auxiliary bars are used here.

Although only a number of examples have been disclosed herein, other alternatives, modifications, uses, and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claims.

## Claims

1. A first node element for attaching two or more elongated bars forming a lattice structure, the first node element comprises:
∘ a coupling side comprising:
▪ one or more hollow insertion channels, wherein each channel is configured to receive an elongated bar, and wherein each channel has a longitudinal axis, and the coupling side defines a plane, and the longitudinal axis of each channel is tilted at an angle with respect to the plane defined by the coupling side,
∘ a contact side comprising:
▪ an opening, wherein the opening is communicated with each of the hollow insertion channels forming a corresponding through-hole such that to form the lattice structure the elongated bars are inserted into the hollow channels from the contact side to the coupling side thereby traversing the corresponding through-hole.

2. A first node element according to claim 1, wherein the coupling side further comprises a mounting element configured to couple an elongated bar.

3. A first node element according to claim 2, wherein the mounting element defines a longitudinal axis, and the longitudinal axis of the mounting element is at an angle between 20 and 90 degrees with respect to the plane defined by the coupling side.

4. A first node element according to any of claims 1 - 3, wherein the opening is configured for receiving a retention element.

5. A first node element according to any of the claims 1 - 4, wherein the longitudinal axis of each hollow insertion channel is tilted at an angle between 20 and 90 degrees with respect to the plane defined by the coupling side.

6. A first node element according to any of the claims 1 - 5, wherein the contact side comprises at least a recess configured to receive a first end of an auxiliary elongated bar.

7. A second node element for attaching one or more elongated bars forming a lattice structure, the second node element comprises:
∘ a coupling side and a contact side, wherein:
▪ the coupling side comprises:
• one or more mounting elements, wherein each mounting element is configured to couple an end of a bar.

8. A kit including:
- at least a first node element according to any of the claims 1 - 6, and
- at least a second node element according to claim 7.

9. A kit according to claim 8, wherein the contact side of the first node element comprises edges located at laterally opposite sides of the contact side, wherein the edges are configured to slidably engage with corresponding grooves in the second node element for coupling the first node element to the second node element.

10. A kit according to any of claims 8 - 9, further comprising a retention element configured to be inserted in the opening of the first node element.

11. A kit according to claim 10 when claim 10 depends on claim 8, wherein when the retention element is inserted in the opening, it protrudes over the contact side of the first node element, wherein the second node element further comprises an opening located at the contact side and configured to mate with the protruding retention element for coupling the second node element to the first node element.

12. A kit according to any of claims 8 - 11, further comprising one or more retention means configured to be inserted in the hollow insertion channels of the first node element from the contact side to the coupling side by traversing the corresponding through-hole such that in use retain the elongated bars inserted into the channels.

13. A method for assembling a lattice structure comprising:
- providing at least one first node element according to any of claims 1 - 6;
- providing at least one second node element according to claim 7;
- providing one or more bars;
- inserting the bars through the hollow insertion channels of the first node element from the contact side to the coupling side by traversing the corresponding through-hole until an end of the bars is attached to a mounting element of the corresponding second node element.

14. A method according to claim 13, further comprising:
- inserting a retention element into the opening of the first node element.

15. A method according to any of claims 13 - 14, further comprising:
- securing a second node element to the first node element after inserting the bars through the hollow insertion channels of the first node element.
